# EUROPÄISCHE PATENTSCHRIFT

(11) **EP 3 037 357 B1**
(45) Veröffentlichungstag und Bekanntmachung des Hinweises auf die Patenterteilung: **10.11.2021**
(21) Anmeldenummer: 15194932.8
(22) Anmeldetag: 17.11.2015
(51) Int. Cl.: B65C 9/22, B65C 9/14

(54) **VORRICHTUNG UND VERFAHREN ZUM ETIKETTIEREN MIT ETIKETTEN MIT AKTIVIERBAREM KLEBER**
METHOD AND DEVICE FOR LABELLING WITH LABELS WITH ACTIVATABLE ADHESIVE
DISPOSITIF ET PROCEDE DESTINES A L'ETIQUETAGE D'ETIQUETTES ADHESIVES POUVANT ETRE ACTIVEES

(30) Priorität: 23.12.2014 DE 102014226937
(43) Veröffentlichungstag der Anmeldung: 29.06.2016
(73) Patentinhaber: Krones AG, 93073 Neutraubling (DE)
(72) Erfinder: RICHTER, Stefan, 93073 Neutraubling (DE); GERTLOWSKI, Georg, 93073 Neutraubling (DE); KRONSEDER, Volker, 93073 Neutraubling (DE)
(74) Vertreter: Grünecker Patent- und Rechtsanwälte PartG mbB

(56) Entgegenhaltungen:
- EP-A1- 1 078 858
- WO-A1-98/53020
- DE-A1- 2 212 562
- DE-C2- 2 902 104
- DE-U1- 29 803 243
- US-A- 2 178 979
- US-A- 4 032 388
- US-B1- 8 616 259

## Beschreibung

### Stand der Technik

Die Erfindung betrifft eine Vorrichtung der im Oberbegriff des Patentanspruchs 1 angegebenen Art, ein Verfahren der im Oberbegriff des Patentanspruchs 13 angegebenen Art, sowie eine Anlage der im Patentanspruch 14 angegebenen Art.

Es sind heutzutage Etikettiermaschinen, wie beispielsweise in der EP 0 135 935 B1 beschrieben, auf dem Markt, bei denen zunächst eine Vielzahl von Etiketten über ein Magazin bereitgestellt werden. Diese Etiketten werden dann auf einzelne Paletten eines Palettenkarussells aufgebracht. Hierzu wird auf die Paletten vorab ein spezieller Leim aufgetragen, so dass die Etiketten bei der Aufnahme aus dem Magazin allein durch die Haftwirkung des auf die Paletten aufgetragenen Leims an den Paletten haften. Das Palettenkarussell dreht dann die jeweilige Palette weg vom Magazin in eine Abgabestellung, in der das Etikett dann von einem Greiferzylinder mechanisch über Greiffinger übernommen wird. Dabei wird das Etikett quasi umgedreht, so dass die mit Leim versehene Fixierseite nach radial außen bezüglich des Greiferzylinders weist. Der Greiferzylinder rollt dann das Etikett mit seiner Fixierseite auf einen vorbei laufenden zu etikettierenden Gegenstand, wobei das Etikett aufgrund der Haftwirkung des Leims an dem zu etikettierenden Gegenstand haften bleibt.

Ferner ist bekannt, wie beispielsweise in der EP 2185425 beschrieben, die Haftwirkung einer Fixierseite einer Etikette durch Befeuchtung zu aktivieren bevor diese an einen Greiferzylinder weitergegeben wird, welcher die Etikette auf einen zu etikettierenden Gegenstand aufbringt.

Die DE 22 12 562 A1 offenbart eine Etikettiervorrichtung gemäß dem Oberbegriff des Anspruchs 1.

Nachteilig an den bekannten Vorrichtungen und Verfahren zum Etikettieren von Gegenständen, sind dabei unter anderem die schlechte Umweltverträglichkeit verwendeter Leime, die Verschmutzung der Etikettiervorrichtungen durch Leim, welche zu langen Reinigungszeiten oder sogar zu erhöhten Etikettiervorrichtungsausfallzeiten führen kann, sowie die gegenwärtig mangelnde Präzision der Etikettierung bei Verwendung von durch Befeuchtung aktivierten aufgetragenen Etiketten, sowie ferner eine durch die Vielzahl von erforderlichen separaten Bauteilen bedingte Komplexität herkömmlicher Etikettiervorrichtungen, welche dadurch eine relativ hohe Anfälligkeit für Fehler aufweisen und hohe Anforderungen an die Wartung stellen.

### Aufgabe

Es ist somit Aufgabe der Erfindung das Etikettieren von Gegenständen, beispielsweise von Gebinden und/oder Behältern in der Lebensmittelindustrie, zu verbessern, insbesondere hinsichtlich Umweltverträglichkeit und Wirtschaftlichkeit des Etikettierens.

### Lösung

Dies wird erfindungsgemäß durch eine Vorrichtung nach Anspruch 1, ein Verfahren nach Anspruch 13, und eine Anlage nach Anspruch 14 erreicht. Vorteilhafte Ausführungsformen und Weiterbildungen sind Gegenstand der Unteransprüche.

Eine Etikettiervorrichtung zum Etikettieren von Gegenständen, insbesondere von Gebinden und/oder Behältern in der Lebensmittelindustrie, umfasst dabei wenigstens einen Etikettenspeicher zum Bereitstellen von Etiketten, vorzugsweise für Einzelblattetiketten, welche mit einer durch Befeuchtung aktivierbaren Fixierseite versehen sein können.

Zudem weist die Etikettiervorrichtung wenigstens eine Palettiereinheit mit wenigstens einer Palette auf, zum Aufnehmen und Übergeben einzelner Etiketten, sowie wenigstens eine Aktivierungseinheit zur Aktivierung der aktivierbaren Fixierseite eines von einer Palette aufgenommenen Etiketts z.B. durch Befeuchtung.

Die Etikettiervorrichtung ist konfiguriert, dass sie eine Direktübergabe von Etiketten von der Palette der Palettiereinheit an einen zu etikettierenden Gegenstand durchführen kann.

Unter einer Direktübergabe von Etiketten von einer Palette einer Palettiereinheit an einen zu etikettierenden Gegenstand, kann dabei insbesondere eine Übergabe ohne den Einsatz eines zwischen der Palettiereinheit und dem zu etikettierenden Gegenstand zusätzlich zwischengeschaltetem Bauteil, wie beispielsweise einem Greiferzylinder, verstanden werden.

Jedoch sei erwähnt, dass es für besagte Direktübergabe nicht zwingend erforderlich sein muss, dass die Palette bei der Übergabe der Etikette an den zu etikettierenden Gegenstand in direkten Berührungskontakt mit dem zu etikettierenden Gegenstand kommen muss.

Unter den im Rahmen der vorliegenden Erfindung eingesetzten Etiketten, sollen insbesondere solche Etiketten verstanden werden, welche ausschließlich eine nur durch Feuchtigkeit oder Flüssigkeit, aktivierbare Fixierseite aufweisen, wobei die Aktivierung der Fixierseite eine Klebewirkung oder eine Haftwirkung der Fixierseite aktivieren kann.

Unter einer aktivierbaren Fixierseite eines Etikettes kann insbesondere ein Etikett verstanden werden, deren eine Seite, die Fixierseite, beispielsweise die Etikettenrückseite, zumindest stellenweise mit einem Klebstoff oder Haftstoff beschichtet sein kann, wobei die Klebewirkung oder Haftwirkung erst durch eine Aktivierung wirksam wird, beispielsweise durch eine Aktivierung durch Befeuchtung mit einem Aktivierungsmittel oder Befeuchtungsmittel.

Es erfolgt also weder eine Leimauftragung auf die Etiketten, noch eine thermische Aktivierung der der Fixierseite der Etiketten. Ferner handelt es bei den Etiketten im Rahmen der vorliegenden Erfindung auch nicht um selbstklebende Etiketten, welche keine wie beschriebene Aktivierung der Fixierseite erfordern.

Die aktivierbare Fixierseite eines Etikettes kann sich auf der Etikettenrückseite befinden oder die Etikettenrückseite sein.

Eine erfindungsgemäße Etikettiervorrichtung oder ein erfindungsgemäßes Etikettierverfahren bietet erhebliche Vorteile.

So können beispielsweise eine Reihe von Bauteilen der Etikettiervorrichtung wie z.B. Beleimungsstation, Greiferzylinder, Leimpumpe und Leimvorratsbehälter entfallen.

Für den Anwender ergeben sich daraus nicht zuletzt Vorteile durch die entfallenden Verschmutzungen durch den Leim und den Wegfall der gesamten Kosten, welche durch Beschaffung, Lagerung und das permanente Nachfüllen des Leimes entstehen.

Die Minimierung der Bauteilanzahl ermöglicht vorteilhafterweise auch eine kompaktere Bauform der Etikettiervorrichtung, eine Reduzierung des Energiebedarfs sowie eine Erhöhung des Wirkungsgrades der Etikettiervorrichtung.

Vor allem jedoch ermöglicht das erfindungsgemäße leimlose Etikettieren ein umweltverträglicheres Etikettieren.

Die Aktivierungseinheit kann wenigstens einen Sprühkopf aufweisen zur gezielten Aufbringung eines Befeuchtungsmittels zur Aktivierung der aktivierbaren Fixierseite des Etiketts. Vorteilhafterweise kann der Sprühkopf als Tintenstrahldruckkopf ausgeführt sein, der anstelle von Tinte, das Aktivierungsmittel oder Befeuchtungsmittel auf die aktivierbaren Fixierseite des Etiketts aufbringt.

Somit kann eine sehr präzise Aufbringung des Aktivierungsmittels oder Befeuchtungsmittels erfolgen, welche nicht zuletzt den Verbrauch von Aktivierungsmittel oder Befeuchtungsmittels optimiert, und dadurch auch mögliche Verschmutzungen der Etikettiervorrichtung minimiert. Ebenso ist denkbar, dass die Aktivierungseinheit wenigstens eine Rolle oder eine Walze, vorzugsweise Softwalze, aufweist, zum Auftragen von Aktivierungsmittel auf die aktivierbare Fixierseite eines Etikettes. Die Rolle/Rollen oder die Walze/Walzen kann/können dabei mechanisch oder über einen SERVO-Motor antreibbar sein.

Besagte Rollen oder Walzen können dabei so betrieben werden, dass sie nicht ständig im Eingriff sind, d.h. nicht ständig in Berührungskontakt mit Paletten der Palettiereinheit sind, sondern wahlweise, beispielsweise pneumatisch gesteuert, zuschaltbar sein können.

Werden beispielsweise keine Etiketten entnommen, kann die Walze in eine Parkposition gefahren bzw. geschaltet werden, sodass eine Verschmutzung der Palletten vermieden werden kann. Vorzugsweise kann eine Softwalze eingesetzt werden, deren Material z.B. weiches Schwamm-, Filz oder Sintermaterial oder ähnliches enthält.

Besagte Rolle oder Walze, bzw. besagte Softwalze, kann dabei mit Aktivierungsmittel oder Befeuchtungsmittel getränkt oder beschichtet sein, welches beispielsweise durch einen Sprühkopf auf die Rolle oder Walze, bzw. besagte Softwalze, aufgetragen werden kann. Auch andere Möglichkeiten zur Auftragung von Aktivierungsmittel oder Befeuchtungsmittel auf die Rolle oder Walze, bzw. besagte Softwalze, sind denkbar, wie z.B. Eintauchen in ein Aktivierungsmittelbad oder Befeuchtungsmittelbad.

Es ist allerdings auch denkbar, dass das Aktivierungsmittel oder Befeuchtungsmittel weniger fokussiert in Form von Nebel oder Dampf auf die aktivierbaren Fixierseite des Etiketts übertragen werden kann.

Darüber hinaus kann die wenigstens eine Palette der Palettiereinheit der Etikettiervorrichtung in Verbindung mit einer Vakuumversorgungseinheit stehen, und die wenigstens eine Palette der Palettiereinheit so konfiguriert sein, dass mittels wenigstens einer Öffnung an einer Etikettenkontaktseite der Palette ein Unterdruck erzeugt werden kann.

Der an der Etikettenkontaktseite der Palette erzeugbare Unterdruck, bzw. der an der/einer Öffnung der Etikettenkontaktseite der Palette erzeugbare Unterdruck, kann insbesondere zum Aufnehmen und Halten der Etiketten eingesetzt werden, wobei die Etikettenkontaktseite in Kontakt mit der Etikettenvorderseite stehen kann.

Mittels der erfindungsgemäßen Druckluftversorgungseinheit tritt an der Etikettenkontaktseite der Palette, bzw. an der/einer Öffnung der Etikettenkontaktseite der Palette, Druckluft aus, welche zur Übergabe und / oder Aufbringung einer von der Palette aufgenommenen Etikette an einen zu etikettierenden Gegenstand dient.

Ebenso ist es gemäß der vorliegenden Erfindung, dass eine Palette eine Vielzahl von Öffnungen an der Etikettenkontaktseite der Palette aufweist, und so konfiguriert ist, das die besagten Öffnungen individuell und/oder gruppenweise und/oder seriell mit Druckluft zur Druckluftbeaufschlagung versorgbar sind, und/oder bei besagten Öffnungen individuell und/oder gruppenweise und/oder seriell und/oder gleichzeitig ein Unterdruck erzeugt werden kann.

Dies erlaubt eine sehr genaue Handhabung der Etiketten, insbesondere während der Aufnahme der Etiketten aus einem Etikettenspeicher und während der Übergabe der Etiketten von der Palette an den zu etikettierenden Gegenstand. So ist beispielsweise denkbar dass eine aufgenommene Etikette schrittweise durch Druckbeaufschlagung über besagte Öffnungen von der Palette abgelöst werden kann und schrittweise auf den zu etikettierenden Gegenstand aufgebracht werden kann.

Sind beispielsweise besagte Öffnungen der Etikettenkontaktseite der Palette in einer Matrix angeordnet, können beispielsweise Öffnungen zeilenweise oder spaltenweise zur Vakuumversorgung und/oder Druckbeaufschlagung angesteuert werden, sodass beispielsweise ein Etikett zeilenweise oder spaltenweise von der Palette abgelöst werden kann und zeilenweise oder spaltenweise auf den zu etikettierenden Gegenstand aufgebracht werden kann.

Die mögliche Verwendung einer Vakuumversorgung zur Unterdruckerzeugung an der Etikettenkontaktseite einer Palette und/oder die mögliche Verwendung einer Druckluftversorgungseinheit zur Druckbeaufschlagung an der Etikettenkontaktseite einer Palette, ermöglicht ferner vorteilhafterweise eine Aufnahme und / oder Übergabe einer Etikette ohne die Notwendigkeit eines direkten Berührungskontakts der Palette mit einem Etikettenspeicher und / oder einem zu etikettieren Gegenstand.

Beispielsweise kann an einer Etikettenaufnahmeposition zur Aufnahme von Etiketten aus dem Etikettenspeicher an einem vorgegebenen Minimalabstand zwischen Etikettenkontaktseite einer Palette und einer Etikettenvorderseite einer vom Etikettenspeicher bereitgestellten Etikette, die Etikette durch einen auf der Etikettenkontaktseite der Palette erzeugten Unterdruck angesaugt werden und von der Palette aufgenommen werden, ohne dass hierzu ein direkter Berührungskontakt zwischen Palette und Etikettenspeicher erforderlich wäre.

Ebenso kann an einer Etikettenübergabeposition zur Übergabe und Aufbringung von Etiketten von der Palette auf einen zu etikettierenden Gegenstand, für einen vorgegebenen Minimalabstand eine Übergabe und Aufbringung von Etiketten von der Palette auf einen zu etikettierenden Gegenstand erfolgen, ohne einen direkten Berührungskontakt zwischen Palette und dem zu etikettierenden Gegenstand.

Auf diese Weise können beispielsweise vorteilhaft mechanische Belastungen der Etiketten, beispielsweise verursacht durch Einklemmen von Etiketten zwischen Palette und Etikettenspeicher und / oder zwischen Palette und dem zu etikettierenden Gegenstand, minimiert werden. Natürlich kann die Etikettiervorrichtung auch so konfiguriert sein, dass ein Berührungskontakt zwischen Palette und Etikettenspeicher und / oder zwischen Palette und dem zu etikettierenden Gegenstand möglich ist.

Die Regulierung der Druckluftbeaufschlagung erfolgt oder wird unterstützt erfindungsgemäß durch die Freigabe oder Verdeckung von Öffnungen wenigstens einer Drehscheibe , welche sich z.B. an einer Position zwischen Etikettenkontaktseite einer Palette und Vakuumversorgungseinheit, und/oder an einer Position zwischen Etikettenkontaktseite einer Palette und Druckluftversorgungseinheit, befinden kann.

Die Druckluftbeaufschlagung und/oder die Unterdruckerzeugung kann insbesondere im Rahmen einer Triebstockschaltung erfolgen, worin z.B. bei einer Lücke zwischen zu etikettierenden Gegenständen die Druckluftbeaufschlagung weggeschaltet werden kann, somit also keine Etikettenübergabe an einer Lücke erfolgt, und/oder bei einer Lücke zwischen zu etikettierenden Gegenständen, durch ein Wegschalten der Vakuumversorgung, die Entnahme von Etiketten aus einem Etikettenspeicher unterbrochen werden kann.

Diese mechanische Regulierung Druckluftbeaufschlagung und/oder die Unterdruckerzeugung kann vorteilweise den Aufbau der Etikettiervorrichtung vereinfachen und robuster gestalten, da beispielsweise die Verwendung von komplizierter Ventiltechnik minimiert werden kann.

Die Etikettenkontaktseite einer Palette kann im Übrigen wenigstens teilweise mit einem elastischen Material, beispielsweise mit einem elastischen Kunststoff-Sintermaterial versehen sein, so dass vorteilhafterweise unerwünschte mechanische Beanspruchungen der Etiketten und/oder der zu etikettierenden Gegenständen minimiert werden können.

Darüber hinaus kann die Etikettenkontaktseite einer Palette mit wenigstens einem Saugnapf ausgestattet sein. Besagter Saugnapf kann beispielsweise über oder neben einer Öffnung der Etikettenkontaktseite einer Palette angeordnet sein.

Für den beispielhaften Fall dass ein/der Saugnapf über einer Öffnung der Etikettenkontaktseite einer Palette angeordnet ist, kann besagter Saugnapf an der Verbindungsseite zwischen Saugnapf und Etikettenkontaktseite der Palette ebenfalls eine Öffnung aufweisen, und somit der Saugnapf in Verbindung stehen mit einer Vakuumversorgungseinheit und/oder in Verbindung mit einer Druckluftversorgungseinheit steht, so dass am Saugnapf, insbesondere an der Saugnapfseite welche in Kontakt mit einer Etikette treten kann, ein Unterdruck erzeugt und/oder Druckluft beaufschlagt werden kann.

Die Etikettenkontaktseite einer Palette kann auch über eine Vielzahl von solchen Saugnäpfen, welche beispielsweise in einer Matrix angeordnet sein können. Beispielsweise zeilenweise oder spaltenweise angeordnete Saugnäpfe können einzeln oder in Gruppen, z.B. zeilenweise oder spaltenweise, zur Vakuumversorgung und/oder Druckbeaufschlagung angesteuert werden, sodass beispielsweise ein Etikett zeilenweise oder spaltenweise von der Palette abgelöst werden kann und zeilenweise oder spaltenweise auf den zu etikettierenden Gegenstand aufgebracht werden kann.

Dies kann vorteilhafter eine sehr präzise und sehr schonende Handhabung der Etiketten während des Etikettiervorgangs ermöglichen.

Eine / die Palette einer Palettiereinheit kann in wenigstens drei Translationsachsen und wenigstens einer oder zwei Rotationsachsen, verstellbar auf der Palettiereinheit angeordnet sein, so das die Palette eine optimale Position bezüglich eines zu etikettierenden Gegenstandes einnehmen kann, und eine Vielzahl von verschiedenartig geformten Gegenständen, beispielsweise konisch geformte Gegenstände, optimal und mit hoher Präzision etikettiert werden können.

Mit anderen Worten kann die Palette z.B. der Kontur / der Form des zu etikettierenden Gegenstandes folgend verstellt werden.

Insbesondere kann die Palette verschiebbar sein, z.B. verschiebbar bezüglich einer Gegenstandstransportebene bzw. Behältnistransportebene, und/oder rotativ verstellbar, z.B. rotativ verstellbar bezüglich einer Gegenstandstransportebene bzw. Behältnistransportebene, und/oder kippbar, z.B. kippbar bezüglich einer Gegenstandstransportebene bzw. Behältnistransportebene, auf der Palettiereinheit angeordnet sein.

Vorzugsweise kann die Palettiereinheit als Karussell mit einer Drehachse ausgeführt sein, und die Palette rotativ verstellbar auf der Palettiereinheit angeordnet sein, wobei die Palette exzentrisch gegenüber der Drehachse der Palettiereinheit angeordnet sein kann.

Darüber hinaus kann die die Palettiereinheit ein Auffangbecken zum Auffangen von überschüssigem Aktivierungsmittel oder überschüssigem Befeuchtungsmittel oder Reinigungsmitteln aufweisen.

Dies ermöglicht z.B. vorteilhafterweise einen Schutz von Bauteilen der Etikettiervorrichtung vor dem unerwünschten Eindringen von Aktivierungsmittel oder Befeuchtungsmittel. Auch ist denkbar, dass das aufgefangene Aktivierungsmittel oder Befeuchtungsmittel, gegebenenfalls mittels z.B. einer Filterung, wiederverwendet werden kann, sodass der Verbrauch von Aktivierungsmittel oder Befeuchtungsmittel reduziert werden kann.

Ein erfindungsgemäßes Verfahren nach Anspruch 13 zum Etikettieren von Gegenständen, insbesondere von Behältnissen in der Lebensmittelindustrie umfasst u.a. die folgenden Schritte:
- Ein Bereitstellen von Etiketten, welche mit einer durch Befeuchtung aktivierbaren Fixierseite versehen sind,
- Ein Aufnehmen wenigstens einer bereitgestellten Etikette durch eine Palette einer Palettiereinheit,
- Eine Aktivierung der durch Befeuchtung aktivierbaren Fixierseite der aufgenommenen Etikette durch Befeuchtung mittels einer Aktivierungseinheit,
- Eine direkte Übergabe und Aufbringen des Etiketts mit aktivierter Fixierseite auf eine Oberfläche des zu etikettierenden Gegenstandes mittels einer / der Palette der Palettiereinheit.

Wie erwähnt, kann dabei unter einer direkten Übergabe eines Etiketts mit aktivierter Fixierseite mittels einer Palette einer Palettiereinheit auf einen zu etikettierenden Gegenstand, insbesondere verstanden werden, dass sich zwischen der Palettiereinheit und dem zu etikettierenden Gegenstand, oder zwischen der Palettiereinheit und dem Transporteur des zu etikettierenden Gegenstands, kein weiteres zusätzliches Bauteil, wie beispielsweise ein Greifzylinder, befindet.

Eine beispielhafte erfindungsgemäße Anlage zur Behandlung von Behältnissen, kann eine Befüllungsvorrichtung zum Befüllen der Behältnisse, eine Verschließvorrichtung zum Verschließen der befüllten Behältnisse, sowie eine wie hier beschriebene erfindungsgemäße Etikettiervorrichtung aufweisen, wobei besagte Etikettiervorrichtung vor oder nach besagter Befüllungsvorrichtung und/oder vor oder nach besagter Verschließvorrichtung angeordnet sein kann.

Ist die Etikettiervorrichtung beispielsweise vor der Befüllungsvorrichtung angeordnet, d.h. sind die Behältnisse noch leer, kann vor dem Etikettieren zudem ein Aufblasen bzw. eine Spülung der Behältnisse mit Sterilluft erfolgen, insbesondere bei Kunststoffbehältnissen.

Zusätzlich kann besagte Anlage z.B. eine der Befüllungsvorrichtung vorgeschaltete Streckblasvorrichtung zum Herstellen der Behältnisse aus Vorformlingen umfassen.

Eine erfindungsgemäße Etikettiervorrichtung erlaubt vorteilhafterweise eine kompaktere Realisierung von Anlagen bzw. Anlagenblöcken zur Behandlung von Behältnissen, durch den Wegfall von einer Vielzahl von Bauelementen, wie z.B. Greiferzylinder und Leimaggregaten. Folgende Figuren stellen beispielhaft dar:
- **Fig.1:**: Beispielhafte Etikettiervorrichtung
- **Fig. 2a:**: Beispielhafte Seitenansicht einer Palette
- **Fig. 2b:**: Beispielhafte Vorderansicht einer Palette
- **Fig. 3:**: Beispielhafte Palettiereinheit
- **Fig. 4:**: Beispielhafte Geometrie der Übergabe zwischen Palette und dem zu etikettierenden Gegenstand
- **Fig. 5:**: Beispielhafte Anlage / beispielhafter Anlagenblock zur Behandlung von Gegenständen / Behältnissen

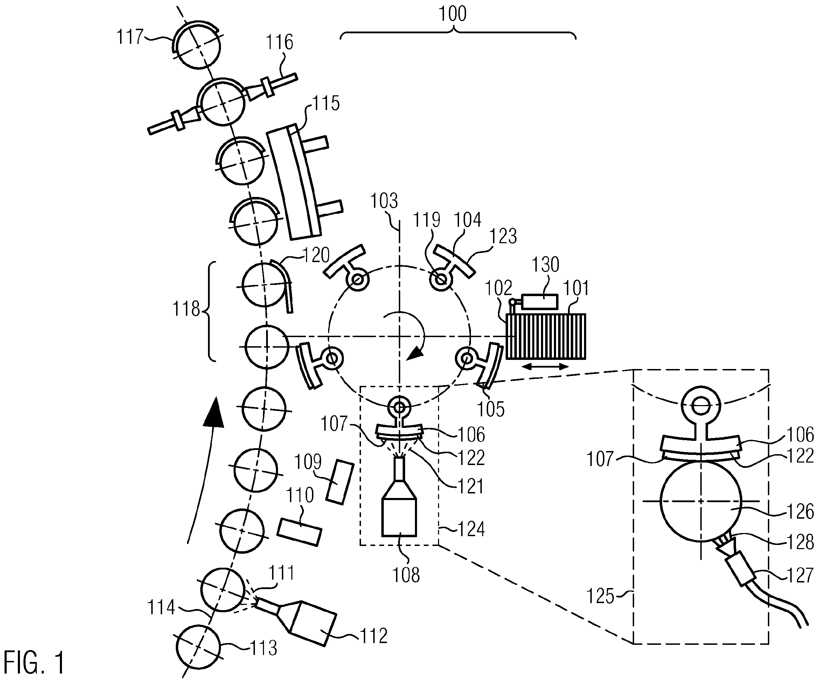

Die **Fig. 1** stellt beispielhaft eine Etikettiervorrichtung 100 zum Etikettieren von Gegenständen 114, insbesondere von Behältnissen in der Lebensmittelindustrie dar.

Die Etikettiervorrichtung 100 weist dabei wenigstens einen Etikettenspeicher 101 zum Bereitstellen von Etiketten 102, 107, die mit einer durch Befeuchtung aktivierbaren Fixierseite versehen sind, auf, sowie wenigstens eine Palettiereinheit 102 mit wenigstens einer Palette 104, 105, 106 zum Aufnehmen und Übergeben einzelner Etiketten 102, und wenigstens eine Aktivierungseinheit 108 zur Aktivierung der aktivierbaren Fixierseite 122 eines von einer Palette aufgenommenen Etiketts 107 durch Befeuchtung.

Der Etikettenspeicher 101 kann vorzugsweise über einen Pneumatik-Zylinder 130 schaltbar gestaltet sein.

Sind z.B. vor dem Einlauf zur Etikettiervorrichtung keine zu etikettierenden Gegenstände, z.B. Behältnisse, vorhanden, kann die Etikettiervorrichtung beispielsweise auf eine geringere Leistung herunter gefahren werden, z.B. auf gleich oder weniger als ca. 12 000 Gegenstände/h, sowie ggfs. vollständig runtergefahren werden. Zusätzlich kann eine Sperre für zu etikettierende Gegenstände aktiviert werden, und der Etikettenspeicher entsprechend gesteuert um wenige Millimeter zurückgefahren, so dass die Etikettiervorrichtung z.B. leer fährt.

Beispielhaft ist die Palettiereinheit 103 als Karussell ausgeführt mit wenigstens einer Palette, vorzugsweise mit einer Vielzahl von Paletten (dargestellt beispielsweise fünf).

Die Verwendung einer Vielzahl von Paletten erlaubt einen effektiveren Etikettierungsvorgang. So kann beispielsweise eine Palette 105 ein Etikett aus dem Etikettenspeicher 101 entnehmen, während z.B. die aktivierbare Fixierseite 122 eines Etikettes 107, welche z.B. zuvor von einer anderen Palette 106 aufgenommenen wurde an einer Aktivierungseinheit 108 aktiviert werden.

Die Entnahme eines Etikettes aus dem Etikettenspeicher 101 durch eine Palette, kann dabei, wie weiter oben beschrieben, unter dem Einsatz der Erzeugung von Unterdruck an der Etikettenkontaktseite der Palette erfolgen.

Die Etiketten sind beispielsweise so in dem Etikettenspeicher 101 eingelegt, dass ihre Vorderseite zur Palettiereinheit 103 bzw. zur Etikettenkontaktseite einer Palette 105 hin weist.

Während z.B. ein entnommenes Etikett von einer Palette 105, 106 gehalten wird, kann die aktivierbare Fixierseite des Etiketts, also beispielsweise die mit wenigstens teilweise mit einem aktivierbaren Klebstoff beschichtete Rückseite des Etiketts nach außen zeigen, so dass diese aktivierbare Fixierseite des Etiketts 122 für eine weitere Behandlung zugänglich ist, insbesondere zugänglich für eine Aktivierung der Klebewirkung oder Haftwirkung der aktivierbaren Fixierseite des Etiketts.

Durch die Bewegungen der Palette / der Palletten mit und auf der Palettiereinheit 103 kann ein Etikett, während es sich auf der Palettiereinheit 103 befindet, im Wesentlichen einen Kreisbogen beschreiben, abgesehen von möglichen zusätzlichen Bewegungen der Palette auf der Palettiereinheit, wie z.B. Drehbewegungen um eine Palettendrehachse, welche z.B. der Drehbewegung der Palettiereinheit 103 um eine Palettiereinheitdrehachse überlagert sein können.

Wie oben erwähnt kann eine Palette darüber hinaus beweglich und verstellbar, insbesondere verschiebbar und/oder drehbar und/oder kippbar und/oder höhenverstellbar, auf einer Palettiereinheit angeordnet sein, und beispielsweise eine Drehachse 119 aufweisen, welche exzentrisch auf einer Palettiereinheit angeordnet sein kann.

Wie beispielhaft dargestellt kann die Etikettenkontaktseite 123 einer Palette 104 z.B. eine konvexe Krümmung aufweisen.

An einer Aktivierungsposition 124 kann die Aktivierung der aktivierbaren Fixierseite 122 einer Etikette 107 erfolgen.

Das Auftragen von Aktivierungsmittel oder Befeuchtungsmittel 121 zur Aktivierung der aktivierbaren Fixierseite 122 einer Etikette 107, z.B. durch Befeuchtung, kann dabei z.B. durch Versprühen einer wasserhaltigen Lösung durch einen Sprühkopf erfolgen, welcher beispielsweise als Tintenstrahldruckkopf ausgebildet sein kann.

Vorzugsweise würde sich ein Tintenstrahlkopf nach der DoD-Technologie (drop-on-demand) besonders gut dafür eignen.

Denkbar wäre z.B., dass für jedes Etikettenformat / jede Etikettform eine Matrix-Vorlage z.B. in einer Maschinen-Steuerung der Etikettiervorrichtung hinterlegt wird, und im Bedarfsfalls je nach Ausstattung die Tropfen eines Aktivierungsmittels / Befeuchtigungsmittels genau der Etikettenform folgend auf die aktivierbare Fixierseite des Etiketts aufbringen zu können, und um so die Fixierseite entsprechend genau aktivieren zu können.

Besagte Tropfen eines Aktivierungsmittels / Befeuchtigungsmittels, können dabei ohne Berührung zwischen Tintenstrahlkopf und aktivierbarer Fixierseite des Etiketts aufgetragen werden.

Zusätzlich, und unabhängig von der Art des Auftragens, kann im Bedarfsfall beispielsweise das Aktivierungsmittel / Befeuchtigungsmittel temperiert, z.B. beheizt werden, bevor es auf die aktivierbare Fixierseite des Etiketts aufgetragen wird.

Wie oben erwähnt, ist es auch denkbar, dass das Auftragen von Aktivierungsmittel auf die aktivierbare Fixierseite 122 einer Etikette 107 mit Rollen oder Walzen (nicht dargestellt), vorzugsweise Softwalzen erfolgen kann.

Diese Option ist beispielhaft durch die alternative Ausführung 125 der Aktivierungsposition 124 dargestellt, worin über eine Softwalze 126 ein Aktivierungsmittel oder Befeuchtungsmittel 128 auf die aktivierbare Fixierseite 122 einer Etikette 107 aufgetragen wird, um die aktivierbare Fixierseite 122 der Etikette 107 zu aktivieren.

Die Softwalze 126 kann dabei über einen Sprühkopf 127 mit Aktivierungsmittel oder Befeuchtungsmittel 128 versehen werden. Denkbar ist auch, die Softwalze 126 z.B. in ein Aktivierungsmittelbad oder Befeuchtungsmittelbad wenigstens teilweise einzutauchen, um die Softwalze 126 mit Aktivierungsmittel oder Befeuchtungsmittel 128 zu benetzen oder zu tränken.

An einer Etikettierposition 118, d.h. der Position oder dem Bereich der direkten Übergabe eines Etiketts von einer Palette der Palettiereinheit an einen zu etikettierenden Gegenstand, kann wenigstens teilweise die Aufbringung eines Etiketts 122 auf einen zu etikettierenden Gegenstand erfolgen.

Die Übergabe des Etiketts erfolgt dabei wie oben beschrieben durch den Einsatz einer Druckluftbeaufschlagung an einer Etikettenkontaktseite einer Palette, und so wird ein wie gewünscht etikettierten Gegenstand 117 erhalten.

Da Umgebungsbedingungen, wie beispielsweise Temperatur und oder Feuchtigkeit / Luftfeuchtigkeitsgehalt, können mitunter signifikanten Einfluss auf die Qualität des Etikettiervorgangs haben, und daher können beispielsweise Umgebungs-bedingungssensoren 109, 110 eingesetzt werden, z.B. zur Messung von Temperatur und/oder Feuchtigkeit in der Umgebung der Aktivierungseinheit und/oder in der Umgebung von zu etikettierenden Gegenständen 113 auf einem Transporteur 114.

Basierend auf den Messungen von beispielsweise Temperatur und oder Feuchtigkeit / Luftfeuchtigkeitsgehalt, sowie in Abhängigkeit der Oberflächenbeschaffenheit eines zu etikettierenden Gegenstandes, kann die zur Aktivierung der aktivierbaren Fixierseite einer Etikette eingesetzte Menge des Aktivierungsmittels, z.B. der Befeuchtigungsgrad, variiert werden, um so eine optimale Haftung der Etikette zu ermöglichen.

Mit anderen Worten kann ein Feedback zwischen den Umgebungsbedingungssensoren 109, 110, sowie von möglichen weiteren Sensoren (nicht dargestellt) die den Zustand der Oberflächenbeschaffenheit des zu etikettierenden Gegenstandes messen, und der Aktivierungseinheit 108, zur Regulation des Auftrags von Aktivierungsmittel oder Befeuchtigungsmittel genutzt werden.

Optional kann eine Vorbehandlungseinheit 112 einen zu etikettierenden Gegenstand 113 auf eine Etikettierung vorbereiten, indem der zu etikettierende Gegenstandsbereich des Gegenstands 113 beispielsweise mit einem Vorbehandlungsmittel 111 gereinigt und/oder z.B. mit einem Aktivierungsmittel vorbefeuchtet werden kann.

Eine Vorbehandlung durch die Vorbehandlungseinheit 112 kann auch eine Abblasung, eine Heizungs-, und/oder eine Strahlungs-, und/oder eine Plasma-, und/oder eine CoronaBehandlung, und/oder eine andere Behandlung für einen Energieeintrag umfassen, um die Anhaftung der Etiketten an den zu etikettierenden Gegenständen, z.B. Gebinden oder Behältnisse, verbessern zu können.

Vergütete Glasflaschen können beispielsweise mit einer temperierten Alkohol-Wasser-Lösung vorbehandelt werden, während hingegen PET -Flaschen z.B. mit eine Plasmabestrahlung vorbehandelt werden können.

Ebenso Optional kann eine Etikette 120, welche nur teilweise bzw. nicht vollständig an einer Etikettierposition 118 von einer Palette an einen zu etikettierenden Gegenstand übergeben wurde, beispielsweise durch eine Anrolleinheit 115 und/oder durch eine Anbürstungseinheit 116 vollständig aufgebracht werden.

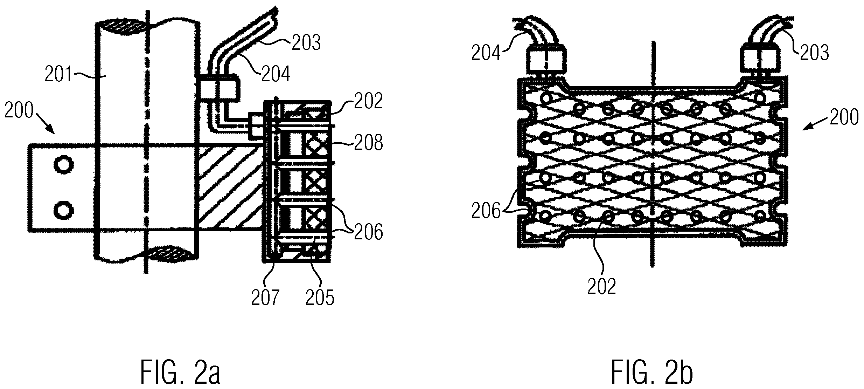

Die **Fig. 2a** stellt eine Seitenansicht einer beispielhaften Palette 200 einer Palettiereinheit dar, welche beispielsweise um eine Drehachse 201 drehbar gelagert ist. Die Palette kann eine Etikettenkontaktseite 202 aufweisen, welche wenigstens teilweise mit einem elastischen Material 208, z.B. mit einem elastischen Kunststoff-Sintermaterial, versehen sein kann.

Die Palette kann einen Kanal oder Kanäle 205 aufweisen, der/welche in Verbindung 203 zu einer Vakuumversorgungseinheit (nicht dargestellt) und/oder in Verbindung 204 mit einer Druckluftversorgungseinheit (nicht dargestellt) stehen kann/können, wobei besagter Kanal / besagte Kanäle jeweils in eine Öffnung / in Öffnungen 205 an der Etikettenkontaktseite 202 der Palette 200 münden können.

Besagte Verbindung 203 zu einer Vakuumversorgungseinheit und/oder besagte Verbindung 204 mit einer Druckluftversorgungseinheit kann ferner durch einen Hauptkanal oder durch mehrere Hauptkanäle 207 erfolgen, von denen besagter Kanal/ besagte Kanäle 205 abzweigen kann.

Somit kann über besagte Öffnung / besagte Öffnungen 206 wahlweise ein Unterdruck an der Etikettenkontaktseite 202 der Palette 200 erzeugt werden, und / oder eine Druckbeaufschlagung an der Etikettenkontaktseite 202 der Palette 200 erfolgen.

Die **Fig. 2b** stellt eine Vorderansicht einer beispielhaften Palette einer Palettiereinheit, beispielsweise der Palette 200, dar.

Wie erwähnt kann die Etikettenkontaktseite 202 der Palette eine Vielzahl von Öffnungen 206 aufweisen, welche, beispielsweise über ein System von Kanälen wie in Fig.2a beschrieben, in Verbindung 203 zu einer Vakuumversorgungseinheit (nicht dargestellt) und/oder in Verbindung 204 mit einer Druckluftversorgungseinheit (nicht dargestellt) stehen kann/können.

Die Form der Öffnungen 206 kann dabei im Wesentlichen rundförmig sein, aber auch andere Öffnungsformen, wie beispielsweise Schlitze, sind denkbar.

Ferner werden die besagten Öffnungen 206 individuell und/oder gruppenweise und/oder seriell , nicht aber gleichzeitig, mit Druckluft zur Druckluftbeaufschlagung versorgt, wobei gegebenenfalls bei den besagten Öffnungen 206 individuell und/oder gruppenweise und/oder seriell und/oder gleichzeitig ein Unterdruck erzeugt werden kann.

Wie dargestellt können beispielsweise besagte Öffnungen 206 der Etikettenkontaktseite 202 der Palette in einer Matrix angeordnet sein, und die Öffnungen 206 zeilenweise oder spaltenweise zur Vakuumversorgung und/oder zur Druckbeaufschlagung angesteuert werden, sodass beispielsweise ein Etikett zeilenweise oder spaltenweise von der Palette abgelöst werden kann und zeilenweise oder spaltenweise auf den zu etikettierenden Gegenstand aufgebracht werden kann.

Darüber hinaus kann die Etikettenkontaktseite 202 der Palette 200, wie weiter oben beschrieben auch mit wenigstens einem Saugnapf (nicht dargestellt) oder einer Vielzahl von Saugnäpfen ausgestattet sein, wobei der Saugnapf / die Saugnäpfe beispielsweise jeweils über oder neben einer Öffnung 206 der Etikettenkontaktseite einer Palette angeordnet sein kann.

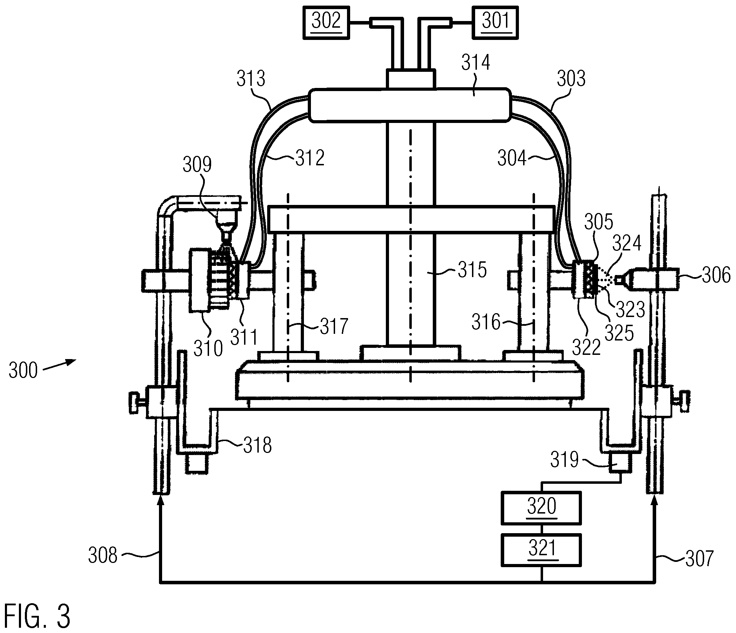

Die **Fig. 3** zeigt beispielhaft eine Palettiereinheit 300, welche beispielsweise als Karussell ausgeführt ist, und welche über einen Verteiler 314, zum Beispiel einen Rotationsverteiler und/oder einen Ringleitungsverteiler, zur Vakuumversorgung und / oder Druckluftversorgung, eine Verbindung 303, 313 zwischen einer Vakuumversorgungseinheit 302 und einer Palette 322, 311 und/oder eine Verbindung 303, 304 zwischen einer Druckluftversorgungseinheit 302 und einer Palette 322, 311 herstellen kann.

Somit kann wahlweise ein Unterdruck an der Etikettenkontaktseite 305 einer Palette 322 erzeugt werden, und / oder eine Druckbeaufschlagung an der Etikettenkontaktseite 305 der Palette 322 erfolgen.

Beispielsweise kann der Verteiler 314 so angeordnet sein, dass er sich bei Betrieb der Palettiereinheit oberhalb der Arbeitsebene der Paletten befindet, sowie zentriert in Bezug auf eine Drehachse 315 der Palettiereinheit ausgerichtet ist.

Die Vakuumversorgungseinheit 301 und/oder die Druckluftversorgungseinheit 302 selbst, können jedoch bevorzugt beispielsweise auch so angeordnet sein, dass sie sich bei Betrieb der Palettiereinheit unterhalb der Arbeitsebene der Paletten befinden können.

Der Verteiler 314 kann so angeordnet sein, dass er sich bei Betrieb der Palettiereinheit unterhalb der Arbeitsebene der Paletten befindet.

Die Paletten 322, 311 können unter anderem drehbar gelagert sein, mit den Drehachsen 316 und 317, sowie, wie bereits beschrieben, vielseitig verstellbar sein, also insbesondere verschiebbar und/oder drehbar und/oder kippbar und/oder höhenverstellbar sein.

Dargestellt ist ferner eine höhenverstellbare Aktivierungseinheit zur Aktivierung der aktivierbaren Fixierseite 323 eines von einer Palette 322 aufgenommenen Etiketts 325, durch Auftragung eines Aktivierungsmittels 324 auf die aktivierbaren Fixierseite 323 des Etiketts 325, beispielsweise durch Befeuchtung.

Das Auftragen des Aktivierungsmittels 324 auf die aktivierbaren Fixierseite 323 des Etiketts 325 kann dabei auf verschieden Weise erfolgen.

Beispielsweise mittels eines Sprühkopfes, welcher z.B. als Tintenstrahldruckkopf ausgeführt sein kann. Ferner kann, wie oben beschrieben, das Auftragen des Aktivierungsmittels 324 auf die aktivierbaren Fixierseite 323 des Etiketts 325 auch durch
Rollen oder Walzen (nicht dargestellt), vorzugsweise durch eine Softwalze, erfolgen.

Die beispielhafte Palettiereinheit 300 verfügt zudem über eine optionale Reinigungseinheit 309, welche z.B. mittels eines Sprühkopfes Reinigungsmittel auf eine Palette 311 an einer Reinigungsposition auftragen kann, und die zu reinigende Palette 311 mit einer Reinigungsbürste reinigen kann.

Die Palettiereinheit 300 kann ferner über einen wenigstens teilweise umlaufenden Schutz / über ein umlaufendes Schutzbecken oder Auffangbecken 318 zum Auffang überschüssiger Aktivierungsmittel und/oder Reinigungsmittel verfügen.

Über einen Ablauf / Abfluss 319 kann dann aufgefangenes überschüssiges Aktivierungsmittel und /oder Reinigungsmittel in ein Reservoir 320 abgeleitet werden und beispielsweise durch Filterung recycelt werden und wieder einer Aktivierungseinheit 306 und/oder einer Reinigungseinheit 309 zugeführt 307,308 werden.

Somit kann vorteilhafterweise der Verbrauch von Aktivierungsmittel und /oder Reinigungsmittel reduziert werden.

Daneben kann die Palettiereinheit 300 auch über ein Reservoir 321 von neuem / unverbrauchtem Aktivierungsmittel und / oder Reinigungsmittel aufweisen.

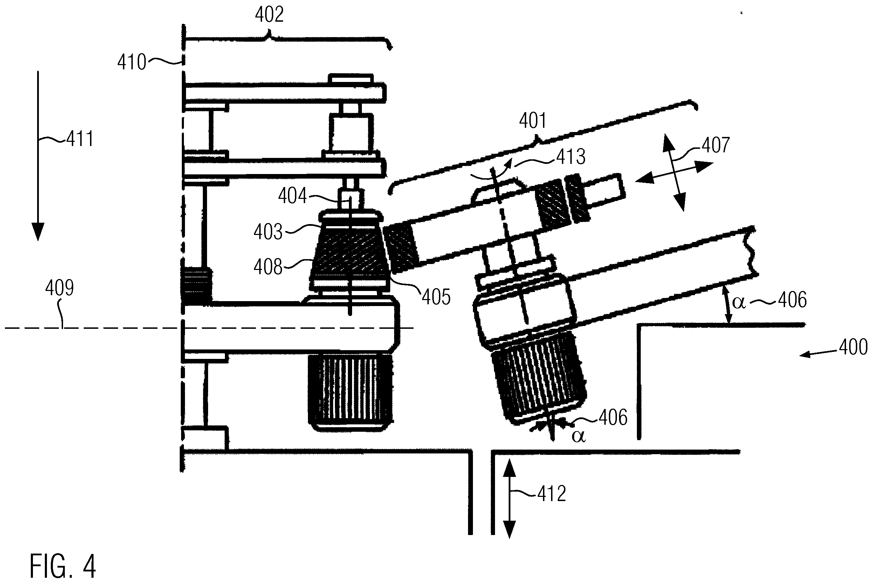

Die **Fig. 4** stellt beispielhaft einen Ausschnitt 400 einer Palettiereinheit und einem Transporteur 402 von zu etikettierenden Gegenständen dar, welche eine mögliche Geometrie zwischen einer Palette 401 und einem zu etikettierenden Gegenstand 403 auf einem Transporteur 402 darstellt.

Besagter Gegenstand kann z.B. konisch geformt ist, sowie beispielsweise drehbar 404 auf dem Transporteur 402 gelagert sein.

Wie bereist mehrfach erwähnt kann sich eine Palette durch eine vielseitige Verstellbarkeit auszeichnen, so dass für nahezu jede beliebige Kontur / Form eines zu etikettierenden Gegenstands eine optimale Ausrichtung der Palette 401, bzw. der Etikettenkontaktseite 405 der Palette 401, erzielt werden kann, um eine optimale Etikettierung zu gewährleisten.

Insbesondere kann die Palette 401 verschiebbar 407 sein, z.B. verschiebbar bezüglich einer Gegenstandstransportebene bzw. Behältnistransportebene 409, und/oder rotativ 413 verstellbar, z.B. rotativ verstellbar bezüglich einer Gegenstandstransportebene bzw. Behältnistransportebene 409, und/oder kippbar, z.B. kippbar bezüglich einer Gegenstandstransportebene bzw. Behältnistransportebene 409, auf der Palettiereinheit angeordnet sein.

Beispielhaft ist ein Kippwinkel α dargestellt, um den die Palette 401 kippbar bezüglich einer Behältnistransportebene / Gegenstandstransportebene 409 oder bezüglich der Schwerkraftrichtung 411 auf der Palettiereinheit verstellbar ist.

Dies erlaubt vorteilhafterweise eine präzise Ausrichtung der Etikettenkontaktseite 405 der Palette 401 bezüglich des Etikettierbereiches eines zu etikettierenden Gegenstands 403.

Darüber hinaus sei bemerkt, dass der Transporteur 402, beispielsweise als Karussell ausgeführt ist mit Drehachse 410, sowie, dass die Palettiereinheit 400 selbst höhenverstellbar sein kann.

Vorteilhafterweise kann die Palettiereinheit auch modular ausgeführt sein (nicht dargestellt). Dabei kann die Palettiereinheit z.B. austauschbar und/oder mittels Rollen fahrbar, an einer Maschinen-Peripherie / Etikettiervorrichtung-Peripherie / Transporteur-Peripherie, insbesondere z.B. an einem Karussell eines Transporteurs für zu etikettierende Gegenstände, an einer höhenverstellbaren bodengestützten Aggregataufnahme andockbar sein.

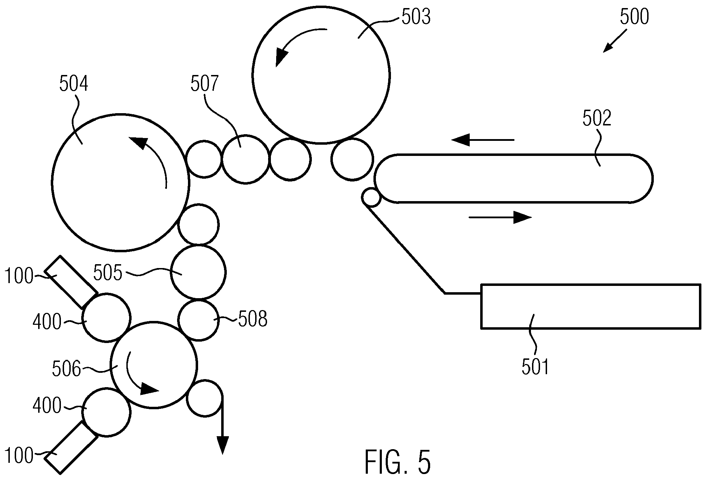

Die **Fig. 5** zeigt beispielhaft einen Anlageblock bzw. eine Anlage 500 zur Behandlung von Behältnissen, die sich, durch Verwendung wenigstens einer (dargestellt beispielsweise zwei) erfindungsgemäßen Etikettiervorrichtung(en) 100 mit Palettiereinheit(en) 400, gegenüber konventionellen Anlagen unter anderem durch einen höheren Wirkungsgrad, optimierten Materialfluss, einfaches Bedienkonzept und geringeren Platz- als auch Energiebedarf auszeichnen kann.

Die Anlage 500 kann dabei eine Befüllungsvorrichtung 504 zum Befüllen der Behältnisse, eine Verschließvorrichtung 505 zum Verschließen der befüllten Behältnisse, sowie eine erfindungsgemäße Etikettiervorrichtung 100 aufweisen, wobei besagte Etikettiervorrichtung(en) 100 vor oder nach besagter Befüllungsvorrichtung 504 und/oder vor oder nach besagter Verschließvorrichtung 505 (wie dargestellt) angeordnet sein kann / sein können.

Zusätzlich kann besagte Anlage 500 eine der Befüllungsvorrichtung vorgeschaltete Streckblasvorrichtung 503 zum Herstellen der Behältnisse aus Vorformlingen umfassen, wobei die die Anlage 500 ferner auch einen Förderer 501 für Vorformlingen sowie eine Heizungseinheit 502 für Vorformlinge umfassen kann.

Ferner kann die Anlage 500 eine Reihe von Transporteuren 506, 507, 508 aufweisen, die beispielsweise als Karussell bzw. als Transportstern mit Neckhandling oder als Transportstern mit Basehandling ausgebildet sein können.

Die kompakte Bauweise der Anlage 500, insbesondere der Wegfall von Bauelementen in der Etikettiervorrichtung 100, wie z.B. eines Greiferzylinders, erlaubt es unter anderem auch die Anzahl von Transporteurwechseln und/oder die Anzahl von Greiferwechseln für einen kompletten Behältnisbehandungsprozess zu minimieren.

Es folgen 5 Blatt mit 6 Figuren und folgenden Bezugszeichen.
- **100**: Etikettiervorrichtung
- **101**: Etikettenspeicher für Etiketten mit aktivierbarer Fixierseite
- **102**: Etikett mit aktivierbarer Fixierseite
- **103**: Palettiereinheit
- **104**: Palette
- **105**: Palette mit aufgenommener Etikette aus dem Etikettenspeicher
- **106**: Palette mit aufgenommener Etikette 107 aus dem Etikettenspeicher an Aktivierungseinheit zur Aktivierung der aktivierbaren Fixierseite der Etikette
- **107**: Etikett
- **108**: Aktivierungseinheit
- **109**: Erster Umgebungsbedingungssensor / Feuchtigkeitssensor, z.B. zur Messung von Temperatur und/oder Feuchtigkeit in der Umgebung der Aktivierungseinheit
- **110**: Zweiter Umgebungsbedingungssensor / Feuchtigkeitssensor, z.B. zur Messung von Temperatur und/oder Feuchtigkeit in der Umgebung von zu etikettierenden Gegenständen auf einem Transporteur
- **111**: Vorbehandlungsmittel
- **112**: Vorbehandlungseinheit
- **113**: Zu etikettierender Gegenstand
- **114**: Transporteur
- **115**: Anrolleinheit
- **116**: Anbürstungseinheit
- **117**: Etikettierter Gegenstand, nach Abschluss des Etikettiervorgangs
- **118**: Etikettierposition, Bereich der Übergabe und der wenigstens teilweisen Aufbringung eines Etiketts auf einen zu etikettierenden Gegenstand
- **119**: Drehachse / Drehlager einer Palette, beispielsweise exzentrisch angeordnet auf einer beispielhaft als Karussell ausgeführten Palettiereinheit
- **120**: Beispielhaftes teilweise aufgebrachtes Etikett
- **121**: Aktivierungsmittel oder Befeuchtungsmittel zur Aktivierung der aktivierbaren Fixierseite einer Etikette, z.B. durch Befeuchtung, z.B. durch Versprühen einer wasserhaltigen Lösung durch einen Sprühkopf, welcher beispielsweise als Tintenstrahldruckkopf ausgebildet sein kann.
- **122**: Aktivierbare Fixierseite einer Etikette, z.B. Etikette 107
- **123**: Etikettenkontaktseite einer Palette, beispielsweise eine konvexe Krümmung Aufweisend
- **124**: Aktivierungsposition / Bereich an dem die aktivierbare Fixierseite einer Etikette aktiviert wird
- **125**: Alternative optionale Ausführung einer Aktivierungsposition
- **126**: Aktivierungseinheit, ausgeführt als Rolle oder Walze, vorzugsweise Softwalze
- **127**: Sprühkopf zum Aufbringen von Aktivierungsmittel oder Befeuchtigungsmittel auf Rolle oder Walze, vorzugsweise Softwalze 126
- **128**: Aktivierungsmittel oder Befeuchtigungsmittel
- **130**: Pneumatik-Zylinder für Etikettenspeicher
- **200**: Palette
- **201**: Drehachse der/einer Palette
- **202**: Etikettenkontaktseite einer/der Palette
- **203**: Verbindung mit einer Vakuumversorgungseinheit
- **204**: Verbindung mit einer Druckluftversorgungseinheit
- **205**: Kanal/Kanäle, in Verbindung zu einer Vakuumversorgungseinheit und/oder Druckluftversorgungseinheit, mit Öffnung an Etikettenkontaktseite einer/der Palette
- **206**: Öffnung an Etikettenkontaktseite einer/der Palette in Verbindung zu einer Vakuumversorgungseinheit und/oder Druckluftversorgungseinheit
- **207**: Hauptkanal / Hauptkanäle in Verbindung zu einer Vakuumversorgungseinheit und/oder Druckluftversorgungseinheit
- **208**: Elastisches Material
- **300**: Palettiereinheit
- **301**: Vakuumversorgungseinheit
- **302**: Druckluftversorgungseinheit
- **303**: Verbindung mit Vakuumversorgungseinheit
- **304**: Verbindung mit Druckluftversorgungseinheit
- **305**: Etikettenkontaktseite einer/der Palette
- **306**: Aktivierungseinheit, beispielsweise höhenverstellbar
- **307**: Zufuhr von Aktivierungsmittel / Befeuchtungsmittel
- **308**: Zufuhr von Reinigungsmittel
- **309**: Reinigungseinheit / Reinigungsmittelsprühkopf
- **310**: Reinigungsbürste
- **311**: Palette, positioniert an optionaler Reinigungseinheit
- **312**: Verbindung mit Druckluftversorgungseinheit
- **313**: Verbindung mit Vakuumversorgungseinheit
- **314**: Verteiler, z.B. Rotationsverteiler, für Vakuumversorgung und/oder Druckluftversorgung
- **315**: Beispielhafte Drehachse der Palettiereinheit
- **316**: Beispielhafte Drehachse einer Palette
- **317**: Beispielhafte Drehachse einer Palette
- **318**: Wenigstens teilweise umlaufender Schutz / umlaufendes Auffangbecken oder Schutzbecken zum Auffang überschüssiger Aktivierungsmittel und/oder Reinigungsmittel
- **319**: Ablauf / Abfluss von aufgefangenem überschüssigem Aktivierungsmittel und / oder Reinigungsmittel zum Ableiten und oder Recyceln
- **320**: Reservoir von aufgefangenem überschüssigem Aktivierungsmittel und / oder Reinigungsmittel mit optionaler Wiederaufbereitung / Filterung
- **321**: Reservoir von neuem / unverbrauchtem Aktivierungsmittel und / oder Reinigungsmittel
- **322**: Palette
- **323**: Aktivierbare fixierte Seite einer Etikette, z.B. Etikette 325
- **324**: Aktivierungsmittel, z.B. durch Versprühen oder per Rolle, oder Walze oder Pinsel oder Bürste aufgetragen
- **325**: Etikett mit aktivierbarer Fixierseite
- **400**: Palettiereinheit / Beispielhafter Ausschnitt einer Palettiereinheit
- **401**: Beispielhafte Palette
- **402**: Beispielhafter Ausschnitt eines Transporteurs von zu etikettierenden Gegenständen
- **403**: Zu etikettierender Gegenstand, beispielsweise konisch geformt
- **404**: Beispielhafte Drehachse eines zu etikettierenden Gegenstandes
- **405**: Beispielhafte Etikettenkontaktseite einer Palette / der Palette 401
- **406**: Beispielhafter Kippwinkel α, um den die Palette 401 kippbar bezüglich einer Behältnistransportebene / Gegenstandstransportebene 409 oder bezüglich der Schwerkraftrichtung auf der Palettiereinheit verstellbar ist.
- **407**: Translative Verstellbarkeit der Palette bezüglich einer Behältnistransportebene / Gegenstandstransportebene 409 und/ oder bezüglich der Schwerkraftrichtung 411
- **408**: Etikettierbereich eines zu etikettierenden Gegenstands
- **409**: Behältnistransportebene / Gegenstandstransportebene
- **410**: Drehachse von Transporteur
- **411**: Schwerkraftrichtung
- **412**: Beispielhafte Höhenverstellbarkeit einer/der Palettiereinheit
- **413**: Drehachse von Palette
- **500**: Beispielhafte Anlage zur Behandlung von Behältnissen
- **501**: Förderer von Vorformlingen
- **502**: Heizungseinheit für Vorformlinge
- **503**: Streckblasvorrichtung
- **504**: Befüllungsvorrichtung
- **505**: Verschließvorrichtung
- **506**: Transporteur
- **507**: Transporteur, z.B. Transportstern mit Neckhandling
- **508**: Transporteur, z.B. Transportstern mit Basehandling

## Patentansprüche

1. Etikettiervorrichtung (100) zum Etikettieren von Gegenständen (113), insbesondere von Behältnissen in der Lebensmittelindustrie, umfassend:
wenigstens einen Etikettenspeicher (101) zum Bereitstellen von Etiketten (102), die mit einer durch Befeuchtung aktivierbaren Fixierseite (122) versehen sind, und wenigstens eine Palettiereinheit (103) mit wenigstens einer Palette (104, 105, 106) zum Aufnehmen und Übergeben einzelner Etiketten, und wenigstens eine Aktivierungseinheit (108, 125) zur Aktivierung der aktivierbaren Fixierseite (122) eines von einer Palette aufgenommenen Etiketts (107) durch Befeuchtung,
wobei die Etikettiervorrichtung (100) konfiguriert ist für eine Direktübergabe von Etiketten (102,107) von der Palette (104, 105, 106) der Palettiereinheit (103) an einen zu etikettierenden Gegenstand (113), **dadurch gekennzeichnet, dass** die wenigstens eine Palette (200) in Verbindung (203) mit einer Druckluftversorgungseinheit (204) steht, und wobei die wenigstens eine Palette eine Vielzahl von Öffnungen (206) an der Etikettenkontaktseite (202) der wenigstens eine Palette aufweist, und so konfiguriert ist, das die besagten Öffnungen (206) individuell und/oder gruppenweise und/oder seriell mit Druckluft zur Druckluftbeaufschlagung versorgbar sind, wobei die Regulierung der Druckluftbeaufschlagung durch die Freigabe oder Verdeckung von Öffnungen einer Drehscheibe erfolgt oder unterstützt wird.

2. Vorrichtung (100) nach Anspruch 1, **dadurch gekennzeichnet, dass** die Aktivierungseinheit (108) wenigstens einen Sprühkopf aufweist zur Aufbringung eines Befeuchtungsmittels (121) zur Aktivierung der aktivierbaren Fixierseite (122) des Etiketts.

3. Vorrichtung (100) nach Anspruch 2, **dadurch gekennzeichnet, dass** als Sprühkopf ein Tintenstrahldruckkopf vorgesehen ist.

4. Vorrichtung (100) nach Anspruch 1, **dadurch gekennzeichnet, dass** die Aktivierungseinheit wenigstens eine Rolle oder Walze, beispielsweise eine Softwalze (126), aufweist, zur Aufbringung eines Befeuchtungsmittels (128) zur Aktivierung der aktivierbaren Fixierseite (122) des Etiketts.

5. Vorrichtung (100) nach einem der vorherigen Ansprüche,
**dadurch gekennzeichnet, dass**
die wenigstens eine Palette (200) der Palettiereinheit in Verbindung (203) mit einer Vakuumversorgungseinheit steht und die wenigstens eine Palette der Palettiereinheit so konfiguriert ist, dass mittels wenigstens einer Öffnung (206) an einer Etikettenkontaktseite (202) der Palette ein Unterdruck erzeugt werden kann.

6. Vorrichtung (100) nach Anspruch 5, **dadurch gekennzeichnet, dass** die wenigstens eine Palette so konfiguriert ist, dass bei besagten Öffnungen (206) individuell und/oder gruppenweise und/oder seriell und/oder gleichzeitig ein Unterdruck erzeugt werden kann.

7. Vorrichtung (100) nach einem der Ansprüche 5 bis 6, **dadurch gekennzeichnet, dass** die Unterdruckerzeugung durch die Freigabe oder Verdeckung von Öffnungen einer Drehscheibe erfolgt oder unterstützt wird.

8. Vorrichtung (100) nach einem der vorherigen Ansprüche, **dadurch gekennzeichnet, dass** die/eine Etikettenkontaktseite (202) der Palette wenigstens teilweise mit einem elastischen Material (208), beispielsweise mit einem elastischen Kunststoff-Sintermaterial versehen ist.

9. Vorrichtung (100) nach einem der vorherigen Ansprüche, **dadurch gekennzeichnet, dass** die/eine Etikettenkontaktseite (202) der Palette mit wenigstens einem Saugnapf ausgestattet ist.

10. Vorrichtung (100) nach einem der vorherigen Ansprüche, **dadurch gekennzeichnet, dass** die Palette verschiebbar, z.B. verschiebbar bezüglich einer Behältnistransportebene (409), und/oder rotativ verstellbar, z.B. rotativ verstellbar bezüglich einer Behältnistransportebene (409), und/oder kippbar, z.B. kippbar bezüglich einer Behältnistransportebene (409), auf der Palettiereinheit angeordnet ist.

11. Vorrichtung (100) nach Anspruch 10, **dadurch gekennzeichnet, dass** die Palettiereinheit als Karussell mit einer Drehachse ausgeführt ist, und die Palette rotativ verstellbar auf der Palettiereinheit angeordnet ist, und wobei die Palette exzentrisch gegenüber der Drehachse der Palettiereinheit angeordnet ist.

12. Vorrichtung (100) nach einem der vorherigen Ansprüche, **dadurch gekennzeichnet, dass** die Palettiereinheit ein Auffangbecken (318) zum Auffangen überschüssiger Aktivierungsmittel oder überschüssiger Befeuchtungsmittel aufweist.

13. Verfahren zum Etikettieren von Gegenständen, insbesondere von Behältnissen in der Lebensmittelindustrie, umfassend:
Bereitstellen von Etiketten, die mit einer durch Befeuchtung aktivierbaren Fixierseite versehen sind,
Aufnehmen wenigstens einer bereitgestellten Etikette durch eine Palette (200) einer Palettiereinheit,
Aktivierung der durch Befeuchtung aktivierbaren Fixierseite der aufgenommenen Etikette durch Befeuchtung mittels einer Aktivierungseinheit,
direkte Übergabe und Aufbringen des Etiketts mit aktivierter Fixierseite auf eine Oberfläche des zu etikettierenden Gegenstandes mittels der Palette (200) der Palettiereinheit, **dadurch gekennzeichnet, dass**
die Palette (200) in Verbindung (203) mit einer Druckluftversorgungseinheit (204) steht, und wobei die Palette eine Vielzahl von Öffnungen (206) an der Etikettenkontaktseite (202) der Palette aufweist, und so konfiguriert ist, das die besagten
Öffnungen (206) individuell und/oder gruppenweise und/oder seriell mit Druckluft zur Druckluftbeaufschlagung versorgbar sind, wobei die Regulierung der Druckluftbeaufschlagung durch die Freigabe oder Verdeckung von Öffnungen einer Drehscheibe erfolgt oder unterstützt wird.

14. Anlage (500) zur Behandlung von Behältnissen, umfassend eine Befüllungsvorrichtung (504) zum Befüllen der Behältnisse, eine Verschließvorrichtung (505) zum Verschließen der befüllten Behältnisse, sowie eine Etikettiervorrichtung (100) nach einem der vorangehenden Ansprüche 1 bis 12, welche vor oder nach besagter Befüllungsvorrichtung (504) und/oder vor oder nach der Verschließvorrichtung (505) angeordnet sein kann.

15. Anlage nach Anspruch 14, zusätzlich umfassend eine der Befüllungsvorrichtung vorgeschaltete Streckblasvorrichtung (503) zum Herstellen der Behältnisse aus Vorformlingen.

## Claims

1. A labeler (100) for labeling objects (113), in particular containers in the food industry, comprising:
at least one label magazine (101) for providing labels (102) having a fixing side (122) that is activatable by moistening, and at least one palletizing unit (103) including at least one pallet (104, 105, 106) for taking up and transferring individual labels, and at least one activating unit (108, 125) for activating, by moistening, the activatable fixing side (122) of a label (107) that has been taken up by a pallet, wherein the labeler (100) is configured for directly transferring labels (102, 107) from the pallet (104, 105, 106) of the palletizing unit (103) to an object (113) to be labeled,
**characterized in that**
the at least one pallet (200) is in connection (203) with a pressurized air supply unit (204), and wherein the at least one pallet comprises a plurality of openings (206) at the label contacting side (202) of the at least one pallet, and is configured such that said openings (206) can be supplied individually and/or in groups and/or serially, wherein the control of the application of pressurized air is effected through or supported by uncovering or covering openings of a rotary disk.

2. The labeler (100) according to claim 1, **characterized in that** the activating unit (108) includes at least one spray head for applying a moistening agent (121) so as to activate the activatable fixing side (122) of the label.

3. The labeler (100) according to claim 2, **characterized in that** the spray head provided is an inkjet print head.

4. The labeler (100) according to claim 1, **characterized in that** the activation unit includes at least one roller or cylinder, e.g. a soft roller (126), for applying a moistening agent (128) so as to activate the activatable fixing side (122) of the label.

5. The labeler (100) according to one of the preceding claims,
**characterized in that**
the at least one pallet (200) of the palletizing unit is in connection (203) with a vacuum supply unit and that the at least one pallet of the palletizing unit is configured such that, by means of at least one opening (206), a negative pressure can be generated at a label contacting side (202) of the pallet.

6. The labeler (100) according to claim 5, **characterized in that** the at least one pallet is configured such that at said openings (206) a negative pressure can be generated individually and/or in groups and/or serially and/or simultaneously.

7. The labeler (100) according to one of the claims 5 to 6, **characterized in that** the generation of a negative pressure is effected through or supported by uncovering or covering openings of a rotary disk.

8. The labeler (100) according to one of the preceding claims, **characterized in that** the the/a label contacting side (202) of the pallet is provided at least partially with an elastic material (208), e.g. with an elastic sintered plastic material.

9. The labeler (100) according to one of the preceding claims, **characterized in that** the/a label contacting side (202) of the pallet is provided with at least one suction cup.

10. The labeler (100) according to one of the preceding claims, **characterized in that** the pallet is arranged on the palletizing unit such that it is shiftable, e.g. shiftable with respect to a container conveying plane (409), and/or rotatively displaceable, e.g. rotatively displaceable with respect to a container conveying plane (409), and/or tiltable, e.g. tiltable with respect to a container conveying plane (409).

11. The labeler (100) according to claim 10, **characterized in that** the palletizing unit is configured as a carousel having an axis of rotation, and the pallet is arranged on the palletizing unit such that it is rotatively displaceable, and the pallet is arranged such that it is eccentric relative to the axis of rotation of the palletizing unit.

12. The labeler (100) according to one of the preceding claims, **characterized in that** the palletizing unit includes a catch basin (318) for collecting excessive activating agent or excessive moistening agent.

13. A method for labeling objects, in particular containers in the food industry, comprising the steps of:
providing labels having a fixing side that is activatable by moistening,
taking up at least one provided label by means of a pallet of a palletizing unit,
activating, through moistening by means of an activating unit, the moisture-activatable fixing side of the label taken up,
directly transferring and applying the label, with the activated fixing side first, to a surface of the object to be labeled by means of the pallet of the palletizing unit,
**characterized in that**
the at least one pallet (200) is in connection (203) with a pressurized air supply unit (204), and wherein the at least one pallet comprises a plurality of openings (206) at the label contacting side (202) of the at least one pallet, and is configured such that said openings (206) can be supplied individually and/or in groups and/or serially, wherein the control of the application of pressurized air is effected through or supported by uncovering or covering openings of a rotary disk.

14. A plant (500) for treating containers, comprising a filling device (504) for filling the containers, a closing device (505) for closing the filled containers as well as a labeler (100) according to one of the preceding claims 1 to 12, which may be arranged upstream or downstream of said filling device (504) and/or upstream or downstream of said closing device (505).

15. The plant according to claim 14, comprising additionally a stretch blow molding device (503) disposed upstream of the filling device and used for producing containers from preforms.

## Revendications

1. Dispositif d'étiquetage (100) permettant d'étiqueter des objets (113), en particulier des récipients de l'industrie alimentaire, comprenant :
au moins un magasin d'étiquettes (101) permettant de fournir des étiquettes (102) munies d'un côté de fixation activable par humidification (122), et au moins une unité de palettisation (103) comprenant au moins une palette (104, 105, 106) permettant d'accueillir et transférer des étiquettes individuelles, et au moins une unité d'activation (108, 125) permettant d'activer par humidification le côté de fixation activable (122) d'une étiquette (107) accueillie par une palette, dans lequel le dispositif d'étiquetage (100) est configuré pour un transfert direct d'étiquettes (102, 107) à partir de la palette (104, 105, 106) de l'unité de palettisation (103) sur un objet (113) à étiqueter, **caractérisé en ce qu'**au moins une palette (200) est en liaison (203) avec une unité d'alimentation en air comprimé (204), et dans lequel la au moins une palette présente une pluralité d'orifices (206) au niveau du côté de contact avec les étiquette (202) de la au moins une palette et est configurée de sorte que lesdits orifices (206) peuvent être alimentés de manière individuelle et/ou groupée et/ou sérielle avec de l'air comprimé en vue d'une injection d'air comprimé,
dans lequel la régulation de l'injection d'air comprimé intervient ou est assistée grâce au débouchage ou au bouchage d'orifices d'un plateau rotatif.

2. Dispositif (100) selon la revendication 1, **caractérisé en ce que** l'unité d'activation (108) présente au moins une tête de pulvérisation permettant d'appliquer un moyen d'humidification (121) afin d'activer le côté de fixation activable (122) de l'étiquette.

3. Dispositif (100) selon la revendication 2, **caractérisé en ce qu'**une tête d'impression de type jet d'encre est prévue en tant que tête de pulvérisation.

4. Dispositif (100) selon la revendication 1, **caractérisé en ce que** l'unité d'activation présente au moins un rouleau ou un cylindre, par exemple un rouleau souple (126), permettant l'application d'un moyen d'humidification (128) afin d'activer le côté de fixation activable (122).

5. Dispositif (100) selon l'une quelconque des revendications précédentes, **caractérisé en ce que** la au moins une palette (200) de l'unité de palettisation est en liaison (203) à une unité d'alimentation en vide et la au moins une palette de l'unité de palettisation est configurée de sorte qu'une dépression peut être générée au moyen d'au moins un orifice (206) au niveau du côté de contact avec les étiquettes (202) de la palette.

6. Dispositif (100) selon la revendication 5, **caractérisé en ce que** la au moins une palette est configurée de sorte qu'une dépression peut être générée de manière individuelle et/ou groupée et/ou sérielle et/ou simultanée pour lesdits orifices (206).

7. Dispositif (100) selon la revendications 5 ou 6, **caractérisé en ce que** la génération de dépression intervient ou est assistée grâce au débouchage ou au bouchage d'orifices d'un plateau rotatif.

8. Dispositif (100) selon l'une quelconque des revendications précédentes, **caractérisé en ce que** le/un côté de contact avec les étiquettes (202) de la palette est muni au moins partiellement d'un matériau élastique (208), par exemple d'un matériau plastique élastique fritté.

9. Dispositif (100) selon l'une quelconque des revendications précédentes, **caractérisé en ce que** le/un côté de contact avec les étiquettes (202) de la palette (1) est équipé d'au moins une ventouse.

10. Dispositif (100) selon l'une quelconque des revendications précédentes, **caractérisé en ce que** la palette est agencée sur l'unité de palettisation de manière à pouvoir être déplacée, par exemple de manière à pouvoir être déplacée par rapport à un plan de transport de récipient (409), et/ou de manière à pouvoir être déplacée en rotation, par exemple de manière à pouvoir être déplacée en rotation par rapport à un plan de transport de récipient (409), et/ou de manière à pouvoir être basculée, par exemple de manière à pouvoir être basculée par rapport à un plan de transport de récipient (409).

11. Dispositif (100) selon la revendication 10, **caractérisé en ce que** l'unité de palettisation est réalisée sous la forme d'un carrousel avec un axe de rotation et la palette est agencée sur l'unité de palettisation de manière à pouvoir être déplacée en rotation, et dans lequel la palette est agencée de manière excentrée par rapport à l'axe de rotation de l'unité de palettisation.

12. Dispositif (100) selon l'une quelconque des revendications précédentes, **caractérisé en ce que** l'unité de palettisation présente une cuve de collecte (318) permettant de collecter un excès d'agent d'activation ou un excès d'agent d'humidification.

13. Procédé d'étiquetage d'objets, en particulier de récipients de l'industrie alimentaire, comprenant les étapes consistant à :
fournir des étiquettes munies d'un côté de fixation activable par humidification,
accueillir au moins une étiquette fournie, grâce à une palette (200) d'une unité de palettisation,
activer le côté de fixation, activable par humidification, de l'étiquette accueillie, grâce à une humidification au moyen d'une unité d'activation,
transférer et appliquer directement le côté de fixation activé de l'étiquette sur une surface de l'objet à étiqueter, au moyen de la palette (200) de l'unité de palettisation,
**caractérisé en ce que** la palette (200) est en liaison (203) avec une unité d'alimentation en air comprimé (204), et dans lequel la palette présente une pluralité d'orifices (206) au niveau du côté de contact avec les étiquettes (202) de la palette et est configurée de sorte que lesdits orifices (206) peuvent être alimentés de manière individuelle et/ou groupée et/ou sérielle avec de l'air comprimé en vue d'une injection d'air comprimé, dans lequel la régulation de l'injection d'air comprimé intervient ou est assistée grâce au débouchage ou au bouchage d'orifices d'un plateau rotatif.

14. Installation (500) permettant de traiter des récipients, comprenant un dispositif de remplissage (504) permettant de remplir les récipients, un dispositif de fermeture (505) permettant de fermer les récipients remplis, et un dispositif d'étiquetage (100) selon l'une quelconque des revendications précédentes 1 à 12, qui peut être agencé en amont ou en aval dudit dispositif de remplissage (504) et/ou en amont ou en aval du dispositif de fermeture (505).

15. Installation selon la revendication 14, comprenant en outre un dispositif de moulage par soufflage avec étirage (503) agencé en amont du dispositif de remplissage et permettant de fabriquer les récipients à partir de paraisons.
